(19) Europäisches Patentamt / European Patent Office / Office européen des brevets

(11) **EP 3 251 514 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(51) Int Cl.:
*A21B 7/00* (2006.01)    *F23J 15/06* (2006.01)

(21) Anmeldenummer: **17156066.7**

(22) Anmeldetag: **14.02.2017**

(54) **MEHRSTUFIGES VERFAHREN ZUR ENERGIEGEWINNUNG IN ANLAGEN UND ANLAGE ZUR DURCHFÜHRUNG DES VERFAHRENS**

MULTI-STAGE PROCESS FOR ENERGY GENERATION IN SYSTEMS AND INSTALLATION FOR CARRYING OUT THE PROCESS

PROCÉDÉ EN PLUSIEURS ÉTAPES DESTINÉ À LA PRODUCTION D'ÉNERGIE DANS INSTALLATIONS ET INSTALLATION DESTINÉE À EXÉCUTER LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2016 DE 102016203347**

(43) Veröffentlichungstag der Anmeldung:
**06.12.2017 Patentblatt 2017/49**

(73) Patentinhaber: **Kuchenmeister GmbH**
**59494 Soest (DE)**

(72) Erfinder: **JANK, Rüdiger**
**16548 Glienicke (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
DE-A1- 19 624 520    DE-A1- 19 825 313
DE-A1-102009 014 805    DE-A1-102011 004 460
DE-B1- 2 450 249    US-A1- 2012 216 762

EP 3 251 514 B1

## Beschreibung

Die vorliegende Erfindung betrifft ein mehrstufiges Verfahren zur Energiegewinnung aus Wasserdampf enthaltenen Schwaden und Abgasen gemäß Anspruch 1 und eine Anlage verwendet zur Durchführung dieses Verfahrens gemäß Anspruch 9.

## Beschreibung

Während der Durchführung thermischer Prozesse, insbesondere bei der Lebensmittelherstellung, verändert sich die die Lebensmittel umgebene Atmosphäre hinsichtlich Enthalpie und Zusammensetzung des Stoffgemisches. Durch Verdampfung von Wasser wird die Umgebungsluft mit Wasser angereichert.

Das entstehende Luft-Dampf-Gemisch wie zum Beispiel im Falle der Backschwaden hat in Abhängigkeit von der relativen Luftfeuchte üblicherweise einen Taupunkt zwischen 50 °C und 90 °C, vorzugsweise zwischen 60 °C und 80 °C. Die Temperatur der Abluft liegt in Abhängigkeit der Prozesswärme zwischen 80 °C und 150 °C.

Der Backschwaden wird nach Verlassen des Backraums kondensiert, zum Beispiel durch Verwendung eines geeigneten Kühlmediums wie Wasser oder Kondensat, dass in einem geeigneten Kondensationsraum im Gegenstrom zu den Backschwaden geführt wird (WO 2012/113800 A1). In Abhängigkeit des Taupunktes liegt die Kondensat-Temperatur hierbei zwischen 60 °C und 80 °C. Dem entstandenen Kondensat kann über einen Wärmetauscher die Wärmeenergie entzogen werden, die zur Erwärmung eines Mediums, wie zum Beispiel Wasser, durch das im Primärkreislauf befindliche Kondensat genutzt wird. Die Temperatur des Mediums im Sekundärkreislauf entspricht maximal der Temperatur des Kondensates. Die Energierückgewinnung dient hier in erster Linie der Erwärmung von Brauch- oder Trinkwasser.

Die für herkömmliche Backanlagen notwendige Wärme wird typischerweise durch Verbrennen von fossilen Energieträgern bereitgestellt. Hierbei entstehen Abgase mit einer durchschnittlichen Abgastemperatur von 250°C bis 350°C.

Aufgrund der hohen Temperaturen können die Abgase ebenfalls zur Wärmerückgewinnung genutzt werden. Verschiedene Ansätze hierfür wurden in der Vergangenheit beschrieben.

So ist aus der DE 2803091 A1 bekannt, bei Durchlaufbacköfen die Abgase einer Rauchgasumwälzheizung und den aus dem Backraum abgeführten Backschwaden zu mischen, gemeinsam einem Wärmetauscher zuzuführen und zur Dampferzeugung zu verwenden. Diese Art der Wärmerückgewinnung ist sehr aufwendig im Verhältnis zur gewonnenen Wärmeenergie.

DE 29602748U1 beschreibt eine Einrichtung zur Energierückgewinnung an Backöfen bestehend aus Kopplung von wärmetauschenden Einrichtungen und einem Rauchgaswäscher. Die Rauchgase werden an einem Thermoölwärmetauscher und einem Wärmetauscher entlang geführt und auf ca. 120 °C heruntergekühlt. Die gekühlten Rauchgase werden anschließend in einem Rauchgaswäscher gereinigt, neutralisiert und weiter abgekühlt. Der Thermoölwärmetauscher entzieht dem Rauchgas einen Teil seiner Wärmeenergie und gibt diese an einen Wärmespeicher weiter. Über den zweiten Wärmetauscher, der mit einem Speicherboiler verbunden ist, kann Brauchwasser erwärmt werden. Nachteilig ist, dass die Wärmerückgewinnung aus Backschwaden nicht stattfindet.

Weiterer relevanter Stand der Technik ist aus den Dokumenten DE 198 25 313 A1, US 2012/216762 A1, DE 10 2009 014805 A1, DE 10 2011 004460 A1, DE 196 24 520 A1 und DE 24 50 249 B1 bekannt. Die DE 198 25 313 A1 stellt den nächstliegenden Stand der Technik dar.

Es ist daher eine Aufgabe der vorliegenden Erfindung, ein Verfahren bereitzustellen, mit welchem eine verbesserte Ausnutzung der Abwärmemengen aus Schwaden und Abgasen insbesondere aus Backanlagen bewirkt wird und somit Wärmeverluste vermieden werden können.

Diese Aufgabe wird erfindungsgemäß durch ein mehrstufiges Verfahren mit den Merkmalen des Anspruchs 1 und eine Anlage ausgelegt zur Durchführung dieses Verfahrens mit den Merkmalen des Anspruchs 9 gelöst.

Demnach wird ein mehrstufiges Verfahren zur Energie- und Wärmegewinnung aus Wasserdampf enthaltenen Schwaden, insbesondere Backschwaden, aus Schwaden freisetzenden Anlagen, insbesondere Backanlagen, und aus Abgasen von mindesten einem Brenner derartiger Anlagen bereitgestellt.

Es werden erfindungsgemäß mehrstufige Verfahren bereitgestellt, welche die Wärmerückgewinnung aus Schwaden, insbesondere Backschwaden, und Abgasen miteinander kombiniert, so dass eine effiziente kombinierte Nutzung der in den Schwaden und in den Abgasen enthaltenen Wärme und Energie zum Einsatz auch in modernen Technologien wie in Absorptionskältemaschinen und ORC-Prozessen ermöglicht wird.

Die Nutzung der Abgaswärme erfolgt dabei auf folgendem Weg: es wird Schwadenkondensat durch die Abgase direkt im Quenchkühler erwärmt.

In den vorliegenden mehrstufigen Verfahren werden in einer ersten Stufe die Wasser enthaltenen Schwaden kondensiert und das erhaltene Schwadenkondensat zur Wärmgewinnung, insbesondere zur Bereitstellung von Warmwasser, verwendet.

Das dadurch abgekühlte Kondensat wird in der erfindungsgemäßen direkten Erwärmungsvariante in einen Quenchkühler gesprüht, in welchen parallel das Abgas (mit einer typischen Abgastemperatur von 250°C bis 350°C) des Brenners eingeleitet wird. Das mit dem Abgas im Quenchkühler vermischte Kondensat verdampft und kühlt das Abgas gleichzeitig ab. Dabei sinkt die Temperatur des nunmehr feuchten, wasserhaltigen Abgases in Abhängigkeit des flüssigen Mediums bis zur Taupunkttemperatur. Gleichzeitig bleibt die Enthalpie h des feuchten Abgases gleich.

Die Temperatur des feuchten Abgases errechnet sich nach

$$h = c\Delta t + pV; \quad \Delta t = \frac{h - pV}{c} \ .$$

wobei c für die spezifische Wärmekapazität, $\Delta t$ für die Temperaturänderung, V für das Gasvolumen und p für den Druck steht. Der Taupunkt des feuchten Abgases ergibt sich aus der Wasserbeladung X. Das Wasserdampf-Abgas-Gemisch wird dann in einem zweiten Kondensationsraum zu einem Abgaskondensat kondensiert, welches wiederum zur Energie- und Wärmegewinnung einsetzbar ist. Das vorliegende Verfahren ermöglicht demnach die Energie- und Wärmegewinnung aus Schwaden und Abgasen in zwei separaten Stufen; zunächst die Wärmerückgewinnung aus einem Schwadenkonsat alleine und anschließend eine Wärmerückgewinnung aus einem unter Verwendung des abgekühlten Schwadenkondsats gewonnenen Abgaskondensats.

In einer Ausführungsform der vorliegenden Verfahren werden die in den ersten Kondensationsraum eingeführten Schwaden und/oder die in den zweiten Kondensationsraum eingeführten Abgase im Gegenstrom im direkten oder indirekten Kontakt mit mindestens einem Kühlmittel kondensiert.

Im Falle eines direkten Kontaktes wird als Kühlmedium zur Schwadenkondensation oder Abgaskondensation bevorzugt Wasser oder Schwaden- / Abgaskondensat verwendet, welches nach Abkühlung und Durchlauf durch einen Wärmeaustauscher zurück in das System geführt wird.

In einer bevorzugten Ausführungsform des vorliegenden Verfahrens wird das mindestens eine Kühlmedium mit einer Fließgeschwindigkeit zwischen 0,5 m/min und 10 m/min, bevorzugt zwischen 1,0 m/min und 5,0 m/min, insbesondere bevorzugt zwischen 1,0 m/min und 2,5 m/min durch den mindestens einen Kondensationsraum geführt. Das Kühlmedium läuft demnach in den Kondensationsraum in Form eines Flüssigkeitsstromes, insbesondere eines kontinuierlichen Flüssigkeitsstromes ein. Es erfolgt keine Sprühkondensation und somit auch keine Tröpfchenbildung des in den Kondensationsraum einlaufenden Kühlmediums. Eine Sprühkondensation wäre im vorliegenden Verfahren auch gar nicht ausführbar, da die Schwaden / feuchten Abgase in den Kondensationsraum mit hoher Strömungsgeschwindigkeit eintreten und damit die Sprühtropfen statt auf einen Füllkörper zu gelangen, vom Luftstrom mitgerissen werden, so dass eine verschlechterte energetische Auslastung bzw. schlechtere Wärmerückgewinnung eintritt.

Das Kühlmedium wie Wasser oder Schwaden- / Abgaskondensat kann ebenfalls mit einem geeigneten Additiv zur Reduzierung der Oberflächenspannung versetzt werden. Hierfür geeignete Additive sind z.B. Tenside oder Emulgatoren, die eine bessere Benetzung der Keramikoberfläche bewirken. Weitere Additive z.B. in Form von geeigneten Säuren können zur Einstellung des pH-Wertes des Kühlmediums verwendet werden. Dabei ist ein saurer pH-Wert des Kühlmediums bevorzugt, um das Wachstum von Mikroorganismen wie Bakterien oder auch Pilze zu verhindern bzw. einzuschränken.

In einer Variante der vorliegenden Verfahren weist das den ersten Kondensationsraum verlassene Schwadenkondensat SK eine Temperatur $T_{SK1}$ von 60 bis 70°C, bevorzugt 65°C auf.

Das Schwadenkondensat wird anschließend in der ersten Wärmetauschanlage auf eine Temperatur $T_{SK2}$ zwischen 20 bis 50°C, bevorzugt 30 bis 40°C abgekühlt. Entsprechend ist $T_{SK1}$ immer größer als $T_{SK2}$.

Die für die vorliegenden Verfahren verwendete Vorrichtung umfasst demnach mindestens eine mit dem mindestens einen Kondensationsraum in Verbindung stehende Wärmeaustauschanlage, durch welche das in dem Kondensationsraum gebildete Schwadenkondensat geführt wird. Die Wärme aus den in dem Kondensationsraum kondensierten Schwaden, d.h. das Schwadenkondensat, das üblicherweise Temperaturen nahe oder oberhalb der Taupunkttemperatur der Schwaden aufweist, wird in einer nachgeschalteten Wärmeaustauschanlage gewonnen und z.B. zur Erwärmung von Wasser verwendet.

Das mit dem vorliegenden Verfahren gewonnene Schwadenkondensat kann somit als Warmwasser über einen Wärmetauscher, gegebenenfalls nach vorheriger Reinigung oder Filterung insbesondere zur Versorgung von Warmwasserheizungen, verwendet wird.

Entsprechend ist es möglich, die erhaltene Wärme innerbetrieblich zu nutzen oder es besteht auch die Möglichkeit, die Wärme mithilfe eines Fernwärmenetzes an Wohneinheiten oder andere Betriebe in der Umgebung, welche Wärme auf relativ niedrigen Temperaturniveau benötigen, in Form von Raumwärme oder Warmwasser zu verteilen.

Wie oben ausgeführt, wird in der ersten Verfahrensvariante mindestens ein Teil des die erste Wärmeaustauschanlage verlassenen abgekühlten Schwadenkondensates in mindestens einen Quenchkühler zum schnellen Abkühlen und Befeuchten der in den Quenchkühler ebenfalls eingeführten heißen Abgase des Brenners eingeführt, insbesondere eingesprüht. Der andere Teil des Schwadenkondensates wird bevorzugt als Kondensationsmittel im ersten Kondensationsraum bzw. ersten Kondensator verwendet.

Unter dem Begriff des "Quenchens" ist vorliegend ein rapides, sehr schnelles Abkühlen der heißen Abgase bei gleichzeitiger Befeuchtung der Abgase zu verstehen. Eine Reaktion von in den Abgasen enthaltenen Substanzen zu unerwünschten Folgeprodukten wird unterbunden.

Die in den mindestens einen Quenchkühler eingeführten Abgase können eine Eingangstemperatur zwischen 200°C und 400°C, bevorzugt zwischen 250°C und 350°C aufweisen.

Die in den Quenchkühler einzuführenden Abgase setzen sich bevorzugt aus Abgasen von z.B. in der Backindustrie verwendeten Brennern zur Wärmeerzeugung zusammen. Typischerweise erfolgt in den Brennern eine Verbrennung von Gas, insbesondere Erdgas gemäß der Gleichung

$$CH_4 + 2O_2 \rightarrow CO_2 + 2H_2O$$

Die Masseströme der in den Quenchkühler eizuführenden Abgase und des Schwadenkondensates sind unabhängig voneinander. Eine Steuerung der Masseströme und die Befeuchtung des Abgases erfolgt, bevorzugt kontinuierlich durch die Überwachung der Taupunkttemperatur. Mögliche im Abgase enthaltende Verunreinigungen verbleiben im Kondensat. Die Konzentration der Verunreinigungen ist gering.

In einer bevorzugten Ausführungsform des vorliegenden Verfahrens werden die in den mindestens einen Quenchkühler eingeführten Abgase auf eine Taupunkttemperatur $TP_A$ zwischen 90°C und 100°C, bevorzugt 99°C abgekühlt.

In einer weiteren Ausführungsform des vorliegenden Verfahrens weist das den zweiten Kondensationsraum verlassene Abgaskondensat eine Temperatur $T_{AK1}$ zwischen 80°C und 100°C, bevorzugt zwischen 90°C und 99°C, insbesondere zwischen 95°C und 99°C auf.

Wie oben bereits angedeutet, wird das Abgaskondensat oder das erwärmte Schwadenkondensat in eine zweite Wärmetauschanlage zur Energie- und Wärmerückgewinnung eingeführt. Hierbei kann das Abgaskondensat oder das erwärmte Schwadenkondensat z.B. zur Versorgung von Warmwasserheizungen, verwendet werden.

Da das Abgaskondensat und das erwärmte Schwadenkondensat in diesem Verfahrensschritt Temperaturen von über 90°C aufweisen, sind noch weitere Anwendungsmöglichkeiten denkbar.

So ist es möglich, das erhaltene Abgaskondensat / erwärmte Schwadenkondensat zur Stromerzeugung in ORC (Organic Rankine Cycle) Anlagen zu verwenden. ORC ist eine moderne Technologie zur Nutzung von Niedertemperaturwärme zur Erzeugung von Strom. Hier wird ein organisches Medium verwendet, welches bereits bei sehr geringen Temperaturen verdampft und eine Dampfturbine bzw. einen Generator zur Stromproduktion antreibt. Der Wirkungsgrad des ORC Prozesses ist abhängig vom Temperaturniveau der Antriebswärme. Es können Wirkungsgrade im Bereich von 10-25 % verwirklicht werden, wobei der Wirkungsgrad mit steigender Antriebstemperatur zunimmt.

Neben den oben genannten Möglichkeiten der Verwendung des Abgaskondensats / erwärmten Schwadenkondensats kann das erhaltene Abgaskondensat / erwärmte Schwadenkondensat zur Kälteerzeugung, insbesondere in Absorptionskälteanlagen oder Kompressionskältemaschinen, verwendet werden.

Die erfindungsgemäße Verfahrensvariante wird in einer Anlage durchgeführt, wobei die Anlage umfasst:

- mindestens einen ersten Kondensationsraum zur Kondensation von Wasserdampf enthaltenen Schwaden, insbesondere Backschwaden,

- mindestens eine erste Wärmetauschanlage, durch welche das im ersten Kondensationsraum gebildete Schwadenkondensat geführt und abgekühlt wird,

- mindestens einen Quenchkühler, in welchen Abgase von mindestens einen Brenner eingeführt bzw. eingesprüht werden und die Abgase unter Zugabe des aus der ersten Wärmetauschanlage eingeführten abgekühlten Schwadenkondensats auf die Taupunkttemperatur gequencht werden;

- mindestens einen zweiten Kondensationsraum zur Kondensation der auf die Taupunkttemperatur abgekühlten Abgase; und

- mindestens eine zweite Wärmetauschanlage, durch welche das im zweiten Kondensationsraum gebildete Abgaskondensat geführt wird.

In einer Ausführungsform der vorliegenden Anlage umfassen der mindestens eine erste Kondensationsraum für die Wasserdampf enthaltenen Schwaden und/oder der mindestens eine zweite Kondensationsraum für die wasserhaltigen Abgase einen horizontal und/oder vertikal angeordneten Behälter mit mindestens einem Eingang für den Eintritt der Wasserdampf enthaltenen Schwaden oder des Abgases und mindestens einem Ausgang für den Austritt des Schwadenkondensats SK oder des Abgaskondensats AK sowie mit mindestens einem Eingang für mindestens ein Kühlmedium und mindestens einem Ausgang für das mindestens eine Kühlmedium, wobei die jeweiligen Eingänge und Ausgänge derart zueinander angeordnet sind, dass Schwaden oder Abgas und Kühlmedium im Gegenstrom den Kondensationsraum durchströmen.

Der mindestens eine Kondensationsraum ist bevorzugt ein zylindrischer Behälter wie eine Säule oder ein Rohr oder ein anderweitiges, zur Durchführung des Verfahrens geeignetes Behältnis. Ebenfalls ist es generell möglich, dass der mindestens eine Kondensationsraum parallel mit weiteren Kondensationsräumen vorliegt.

Ein geeigneter Kondensationsraum ist z.B. in der WO 2012/113800 A1 beschrieben. In einer bevorzugten Ausführungsform erfolgt die Kondensation der Schwaden oder der Abgase an mindestens einer Oberfläche eines in dem Kondensationsraum angeordneten Kondensationsmittels. Das mindestens eine Kondensationsmittel ist dabei in dem Kondensationsraum derart angeordnet, dass es zumindest zeitweise von dem Kühlmedium kontaktiert bzw. befeuchtet wird. Aufgrund dieser zumindest zeitweise stattfindenden Benetzung der Oberfläche des Kondensationsmittels mit dem Kühlmittel entfällt die Notwendigkeit des Waschens derselben, da ggf. auskondensierte bzw. abgeschiedene organischen Stoffe unmittelbar im Schwadenkondensat / Abgaskondensat gelöst sind. Ein wesentlicher Aspekt ist dabei, dass die Oberfläche der Kondensationsmittel nicht antrocknet, da es sonst zu schwer zu entfernenden Verkrustungen auf der Oberfläche des Kondensationsmittels kommt.

Die mindestens eine Oberfläche des in dem Kondensationsraum angeordneten Kondensationsmittels kann eine Hohlraumstruktur, insbesondere ein offenporiges Zellsystem, eine strukturierte Packung und/oder eine unstrukturierte Packung aufweisen. Es ist ebenfalls möglich, die Kondensationsmittel mit metallorganischen oder biokatalytischen Oberflächen zu versehen bzw. zu beschichten,

In einer bevorzugten Ausführungsform liegt das als Kondensationsmittel verwendete offenporige Zellsystem in Form eines keramischen Porensystems mit einer Porung von 20 ppi, bevorzugt 15 ppi, insbesondere bevorzugt von 10 ppi vor. So ist z.B. die Verwendung von Keramikschaum mit einer entsprechenden Porengröße denkbar, wobei dieser ca. 20% des freien Querschnitts des Kondensationsraumes, der z.B. in Form einer Säule oder eines Rohres ausgebildet ist, beansprucht.

In einer weiteren Ausführungsform der vorliegenden Anlage ist die mindestens eine erste Wärmetauschanlage mit einer Vorrichtung zur Wärmegewinnung, insbesondere zur Versorgung von Warmwasserheizungen, gekoppelt.

Der in der erfindungsgemäßen Anlagenvariante verwendete Quenchkühler ist in einer Ausführungsform in Form eines Druckbehälters mit mindestens einem Einlass für das Schwadenkondensat und mindestens einen Einlass für das Abgas und mindestens einen Auslass für das befeuchtete (und gequenchte) Abgas. Am Auslass ist zudem mindestens ein Auslass vorgesehen. Der Qunechkühler kann auch druckloser Behälter vorliegen.

In einer weiteren Ausführungsform ist die mindestens eine zweite Wärmetauschanlage mit einer Vorrichtung zur Wärmegewinnung, insbesondere zur Versorgung von Warmwasserheizungen, gekoppelt.

Auch kann die mindestens eine zweite Wärmetauschanlage mit mindestens einer Vorrichtung zur Erzeugung von Strom, insbesondere einer ORC (Organic Rankine Cycle) Anlage, in Verbindung stehen, in welcher das Abgaskondensat / erwärmte Schwadenkondensat zur Stromerzeugung verwendet wird.

Des Weiteren besteht die Möglichkeit, dass die mindestens eine zweite Wärmetauschanlage mit mindestens einer Vorrichtung zur Kälteerzeugung, insbesondere Absorptionskälteanlagen oder Kompressionskältemaschinen in Verbindung steht, in welcher das Abgaskondensat / erwärmte Schwadenkondensat zur Kälteerzeugung verwendet wird.

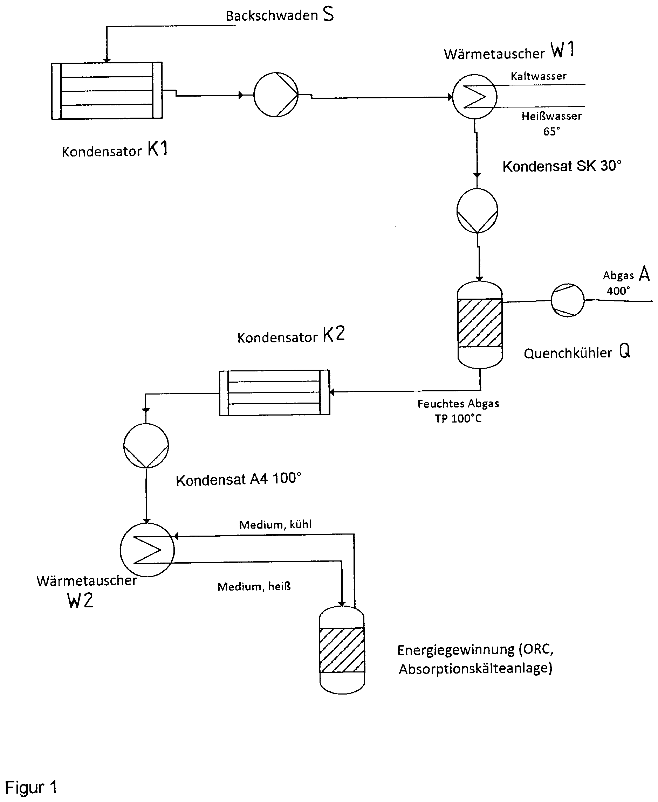

Die Erfindung wird nachfolgend unter Bezugnahme auf die Figur 1 näher erläutert. Es zeigen:

Figur 1    eine schematische Darstellung einer Anlage zur Durchführung des vorliegenden Verfahrens gemäß einer ersten Ausführungsform; und

Figur 2    eine schematische Darstellung einer nicht erfindungsgemäßen Anlage.

Die in Figur 1 schematisch gezeigte Anlage dient der direkten Kondensaterwärmung. Die Anlage umfasst einen ersten Kondensationsraum oder Kondensator K1, eine erste Wärmetauschanlage W1, einen Quenchkühler Q mit einer Zuleitung von Abgasen, einen zweiten Kondensationsraum oder Kondensator K2 und eine zweite Wärmetauschanlage W2, die mit einer Vorrichtung zur Energiegewinnung gekoppelt ist.

Der erste Kondensationsraum K1 ist als horizontal oder vertikal angeordneter Behälter vorgesehen und umfasst ein geeignetes Kondensationsmittel (nicht gezeigt) wie z.B. ein keramisches Sintermaterial bzw. Keramikschaum.

Die einen Backofen verlassenen Backschwaden S treten an einem Ende des Kondensators K1 mit einer Temperatur $T_S$ ein. Während des Durchströmens des Kondensators K1 werden die Backschwaden S im Gegenstrom durch ein geeignetes Kühlmittel in Form von Kondensat oder Wasser abgekühlt, welches am anderen Ende des Kondensators K1 eintritt.

Während des Durchströmens des Kondensators K1 erfolgt neben der Abkühlung der Backschwaden S auch deren Kondensation, wobei es zu einer gleichzeitigen Kondensation von in den Schwaden enthaltendem Wasserdampf als auch einer Abscheidung der in den Schwaden enthaltenden organischen Bestandteile kommt. Hierbei erfolgt bevorzugt eine vollständige bzw. fast vollständige Kondensation der Backschwaden, so dass auf die Verwendung von weiteren Kondensationsmitteln wie z.B. Wärmeaustauschern im Kondensationsraum oder außerhalb des Kondensationsraumes verzichtet werden kann.

Nach Verlassen des Kondensators K1 wird das Schwadenkondensat SK in eine erste Wärmeaustauschanlage W1 eingeführt. Die Wärmeaustauschanlage W1 ist konventioneller Art, so dass die konstruktive Gestaltung des Wärmeaustauschers beliebig gewählt werden kann. In der Wärmeaustauschanlage W1 wird das Schwadenkondensat K1 durch Vorbeiführen an einem geeigneten Kühlmittel wie z.B. Wasser auf ca. 30°C abgekühlt. Das Kühlwasser wird in die Anlage W1 eingespeist, in der Anlage W1 erwärmt und verlässt die Anlage W1 mit einer erhöhten Temperatur (ca. 65°C). Das erwärmte Kühlwasser kann als Warmwasser für Gebäudeheizungsanlagen oder zur Vorwärmung von Kesselspeisewasser verwendet werden.

Ein Teil des aus der Wärmeaustauschanlage W1 austretenden abgekühlten Schwadenkondensats SK wird entweder in den Quenchkühler Q zum Quenchen der Abgase eingeführt.

Ein anderer Teil des aus der Wärmeaustauschanlage W1 austretenden abgekühlten Schwadenkondensats SK kann aber auch als Kühlmedium zur Abkühlung der Backschwaden im Kondensator K1 wiederverwendet.

Die Abgase A des Brenners werden mit einer Temperatur von 250-350°C in den Quenchkühler Q eingeführt und vermischen sich dort unter rapider Abkühlen und Feuchtigkeitsaufnahme mit dem abgekühlten Schwadenkondensat SK. Im Quenchkühler Q kommt es somit zur Ausbildung eines feuchten Abgases A mit einer Taupunkttemperatur von 100°C.

Das feuchte Abgas A wird in den zweiten Kondensator K2 eingeführt, dessen Aufbau und Funktionsweise im Wesentlichen mit dem Kondensator K1 übereinstimmt, so dass auf die obigen Ausführungen verwiesen wird. Das feuchte Abgas wird im Kondensator K2 zu einem Abgaskondensat AK mit einer Temperatur von 100°C verflüssigt.

Das Abgaskondensat AK wird anschließend in den Wärmetauscher W2 eingespeist, und kann zur Erwärmung von Wasser oder auch zur Energiegewinnung in ORC Anlagen oder Absorptionskälteanlagen genutzt werden.

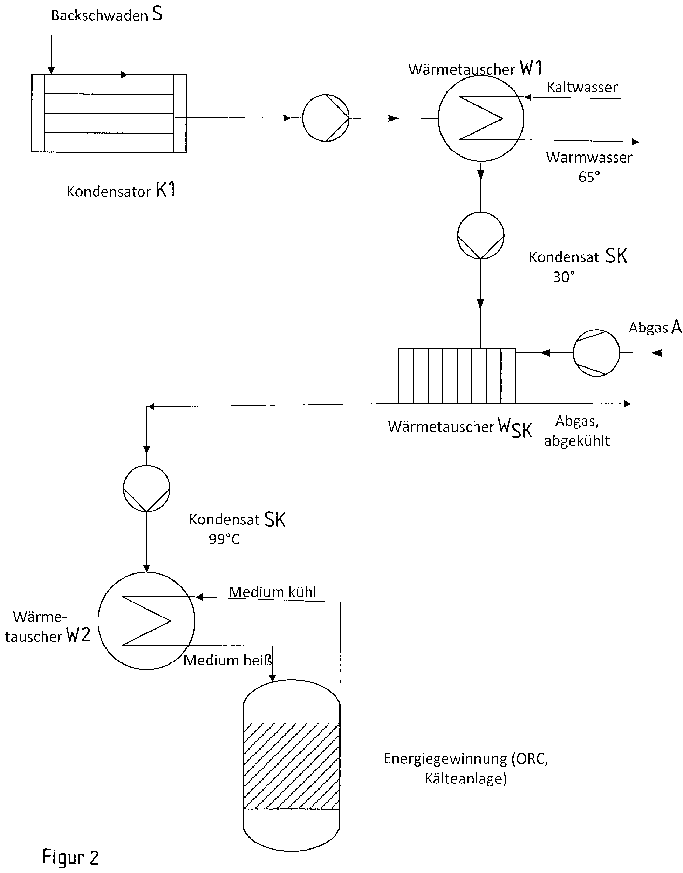

Die in Figur 2 gezeigte nicht erfindungsgemäße Anlage zur indirekten Erwärmung des die Wärmetauschanlage W1 austretenden abgekühlten Schwadenkondensats SK (Temperatur 30°C) umfasst einen Wärmetauscher WSK, in welchen die Brennerabgase A bevorzugt im Gegenstrom zum Schwadenkondensat SK durchgeführt wird. Das Schwadenkondensat SK wird auf eine Temperatur von ca. 99°C erwärmt. Das erwärmte Schwadenkondensat wird dann in Analogie zu der ersten Ausführungsform zur Wärmeerzeugung und/oder Energiegewinnung verwendet.

**Ausführungsbeispiel 1:** direkte Erwärmung des Schwadenkondensates SK

a) Verbrennung von Erdgas: $CH_4 + 2O_2 \rightarrow CO_2 + 2H_2O$

Die Verbrennung des Erdgases erfolgt in einem Brenner mit einer Brennerleistung von 50kW und einem Gasbedarf von 50m$^3$/h.

Die Dichten der einzelnen im Erdgas enthaltenen Gase setzen sich wie folgt zusammen: Methan: 0,336702325kg/m$^3$, Sauerstoff: 1,032kg/m$^3$, Stickstoff: 0,9027kg/m$^3$, Kohlendioxid 1,422 kg/m$^3$, Wasserdampf: 0,590kg/m$^3$ mit den molaren Massen: Methan 16,0430 g/mol, Sauerstoff 31,9988 g/mol, Stickstoff 28,0134 g/mol, Wasser 18,0152 g/mol, Kohlendioxid 44,0098 g/mol.

Bei Einsatz von 50m$^3$ Methan (16,835 kg bzw. 1050mol) als Brenngas ergibt sich folgende Massebilanz: 1050mol $CH_4$ + 2100mol $O_2 \rightarrow$ 1050mol $CO_2$ + 2100mol $H_2O$.

b) Berechnung der Stickstoffmenge im Abgas

2100mol x 31,9988g/mol= 67,198kg Sauerstoff; Volumenanteil Sauerstoff: 20,95%; Masseanteil Sauerstoff: 23,15%. Daraus ergibt sich ein Stickstoffanteil von 223,074kg.

c) Berechnung der theoretischen Abgasmenge

Es fällt eine Abgasmenge von 46,210kg $CO_2$; 37,832kg Wasserdampf und 223,074kg Stickstoff an. Die Abgasmenge$_{gesamt}$ ergibt sich zu 307,116kg.

Das Abgasvolumen beträgt 32,496m$^3$ $CO_2$; 64,122m$^3$ Wasserdampf; 247,119m$^3$ Stickstoff. Entsprechend umfasst das Abgasvolumen$_{gesamt}$ 343,737m$^3$ (ohne Berücksichtigung der Falschluft).

d) Berechnung der Abgasbefeuchtung

Die absolute Feuchte von feuchter Luft bei 100°C und einer relativen Luftfeuchte von 100% beträgt 593,4g/kg.

Die vorhandene Wassermenge beläuft sich auf 123,2g kg$^{-1}$.

Die Aufnahmekapazität der Abgase von Feuchtigkeit beträgt bei 100°C und einem Taupunkt von 99,9° 470,2gkg$^{-1}$.

Ein Kondensat aus Backschwaden aus einer Backlinie für 3000kg Toastbrot und einem Backverlust von 14% weist ca. 487kg Feuchtigkeit auf. Davon werden 144,4kg zur Befeuchtung des Abgases genutzt. Der Rest dient als Kondensationsmittel.

e) Energiebedarf für die Abgasbefeuchtung

Die Enthalpie des Abgases setzt sich wie folgt zusammen:

Kohlendioxid: h= 771,2 kJ/kg

Wasserdampf: h= 2749 kJ/kg

Stickstoff: h= 598,2 kJ/kg

Bei 307,116kg Abgas beträgt die Enthalpie demnach

$CO_2$: 46,210kg X 771,2 kJ/kg =35.637kJ

$H_2O$: 37,832kg X 2749 kJ/kg =104.000kJ

$N_2$: 223,074kg X 598,2 kJ/kg = 133.443kJ

Enthalpie gesamt: = 273.080kJ = 75,8kW

Die Verdampfungswärme des Wassers beträgt 2257kJ (Erwärmung des Wassers: q= 70K X 4,19kJ/kgK= 293,3kJ $\sum$q= 2550kJ/kg; erzeugter Wasserdampf: 273080kJ : 2550kJ/kg=107kg Dampf).

Daraus ergibt sich für den Taupunkt bei t= 99,9°C; relative Luftfeuchte= 82%, absolute Feuchte: 421,3g/m$^3$ ein Wert von 90,6°C.

Beispiel eines nicht erfindungsgemäßen Verfahrens **2**: indirekte Erwärmung des Schwadenkondensates SK

f) Wärmetauscher für Erhitzung des Kondensates mit Abgas

Das in der ersten Kondensationsstufe K1 erzeugte Kondensat wurde auf 30°C durch Energieabgabe in einem Wärmetauscher W1 abgekühlt.

In der zweiten Energierückgewinnungsstufe wird das Kondensat von 30°C auf 99°C erwärmt. Dabei wird die gesamte Wassermenge aus dem Backverlust verwendet (Q= 487kg 4,19kJ/kgK·69K=140.796,57kJ). Die verfügbare Wärmemenge aus dem Abgas beträgt 273.080kJ.

Die Nutzung der Restwärme (132.283,43kJ) durch Erwärmung von Trink-oder Brauchwasser von 12°C auf 99°C: q=4,19kJ/kgK·87K= 364,53kJ; m$_{Wasser}$= 132.283kJ : 364,53kJ/kg = 362,887kg; h$_{gesamt}$= (487kg+362,9kg)·4,19kJ/kgK·99K=352.547,019kJ

Die Energiebilanz ergibt sich wie folgt:

Eingang:

Kondensat: 30°C; 487kg; h= 61.215kJ

Wasser: 12°C;362,9kg h=18.246,6kJ

Abgas: 300.307kg; 300°C h=273.080kJ

Q$_{ges}$=352.542kJ=97,9kW

Ausgang:

Kondensat, Wasser: 99°C, 849,9kg

Q$_{ges}$= 352.547kJ=97,9kW

g) Energiebilanz des Gesamtprozesses:

Der Energiebedarf für den Backprozess ergibt sich aus Erwärmung der Backwaren (Q=3000kg·2,6kJ/kgK·70K=546.000kJ) und Verdampfen von Wasser ( Q=487kg·2257kJ/kg=1.099.159kJ). Der Gesamtenergiebedarf für den Backprozess ist demnach $Q_{ges}$=1.645.159kJ=457kW.

Aus der Rückgewinnung durch Kondensierung von Wasserdampf (1.099.159kJ) und der Enthalpie des erwärmten Kondensates durch Abwärmenutzung (352.547kJ) wird eine Gesamtenergie von 1.451.706kJ=403kW wiederverwendet bzw. rückgenutzt.

Der theoretische Wirkungsgrad des vorliegenden Prozesses ergibt sich somit zu 88%.

## Patentansprüche

1. Mehrstufiges Verfahren zur Gewinnung von Energie aus Wasserdampf enthaltenen Schwaden, insbesondere Backschwaden, aus Schwaden freisetzenden Anlagen, insbesondere Backanlagen, und Abgasen von mindesten einem Brenner derartiger Anlagen
umfassend die Schritte

   - Einführen der Schwaden S in mindestens einen ersten Kondensationsraum (K1) unter Ausbildung eines Schwadenkondensats SK mit der Temperatur $T_{SK1}$;
   - Einführen des den ersten Kondensationsraum (K1) verlassenen Schwadenkondensats SK in mindestens eine erste Wärmetauschanlage (W1) unter Abkühlung des Schwadenkondensats SK auf eine Temperatur $T_{SK2}$;
   - Einsprühen von zumindest einem Teil des abgekühlten Schwadenkondensats SK mit der Temperatur $T_{SK2}$ in mindestens einen Quenchkühler (Q) und Quenchen von in den mindestens einen Quenchkühler (Q) eingeführten Abgasen A mit einer Temperatur $T_A$ auf die Taupunkttemperatur $TP_A$; wobei das mit dem Abgas vermischte Schwadenkondensat verdampft und das Abgas gleichzeitig abgekühlt wird;
   - Einführen der in dem mindestens einen Quenchkühler (Q) auf die Taupunktemperatur $TP_A$ abgekühlten und mit dem verdampften Schwadenkondensat vermischten Abgase A in einen zweiten Kondensationsraum (K2) unter Ausbildung eines Abgaskondensats AK mit der Temperatur $T_{AK1}$, und
   - Einführen des den zweiten Kondensationsraum (K2) verlassenen Abgaskondensats mit der Temperatur $T_{AK1}$ in mindestens eine zweite Wärmetauschanlage (W2) unter Abkühlung des Abgaskondensats AK auf eine Temperatur $T_{AK2}$.

2. Verfahren nach Anspruch 1, **dadurch gekennzeichnet, dass** die in den ersten Kondensationsraum (K1) eingeführten Schwaden und/oder die in den zweiten Kondensationsraum (K2) eingeführten Abgase A im Gegenstrom im direkten oder indirekten Kontakt mit mindestens einem Kühlmittel kondensiert werden.

3. Verfahren nach einem der vorhergehenden Ansprüche, **dadurch gekennzeichnet, dass** das den ersten Kondensationsraum (K1) verlassene Schwadenkondensat SK eine Temperatur $T_{SK1}$ von 60 bis 70°C, bevorzugt 65°C aufweist.

4. Verfahren nach einem der vorhergehenden Ansprüche, **dadurch gekennzeichnet, dass** das Schwadenkondensat SK in der ersten Wärmetauschanlage (W1) auf eine Temperatur $T_{SK2}$ zwischen 20 bis 50°C, bevorzugt 30 bis 40°C abgekühlt wird.

5. Verfahren nach einem der vorhergehenden Ansprüche, **dadurch gekennzeichnet, dass** die in den mindestens einen Quenchkühler (Q) eingeführten Abgase A eine Eingangstemperatur $T_A$ zwischen 200°C und 400°C, bevorzugt zwischen 250°C und 350°C aufweisen.

6. Verfahren nach einem der vorhergehenden Ansprüche, **dadurch gekennzeichnet, dass** die in den mindestens einen Quenchkühler (Q) eingeführten Abgase A auf eine Taupunkttemperatur $TP_A$ zwischen 90°C und 100°C, bevorzugt 99°C abgekühlt werden.

7. Verfahren nach einem der vorhergehenden Ansprüche, **dadurch gekennzeichnet, dass** das den zweiten Kondensationsraum (K2) verlassene Abgaskondensat AK eine Temperatur $T_{AK1}$ zwischen 80°C und 100°C, bevorzugt zwischen 90°C und 99°C, insbesondere zwischen 95°C und 99°C aufweist.

8. Verfahren nach einem der vorhergehenden Ansprüche, **dadurch gekennzeichnet, dass** das Abgaskondensat AK oder das erwärmte Schwadenkondensat SK

- zur Wärmegewinnung, insbesondere zur Versorgung von Warmwasserheizungen;
- zur Stromerzeugung, insbesondere in einer ORC (Organic Rankine Cycle) Anlagen; und/oder
- zur Kälteerzeugung, insbesondere in Absorptionskälteanlagen oder Kompressionskältemaschinen,
verwendet wird.

9.  Anlage verwendet zur Durchführung eines Verfahrens nach einem der vorhergehenden Ansprüche umfassend

- mindestens einen ersten Kondensationsraum (K1) zur Kondensation von Wasserdampf enthaltenen Schwaden S, insbesondere Backschwaden,
- mindestens eine erste Wärmetauschanlage (W1), durch welche das im ersten Kondensationsraum (K1) gebildete Schwadenkondensat SK geführt wird und abgekühlt wird,
- mindestens einen Quenchkühler (Q), in welchen Abgase A des mindestens einen Brenners eingeführt werden und die Abgase A unter Zugabe des aus der ersten Wärmetauschanlage (W1) eingeführten abgekühlten Schwadenkondensats SK auf die Taupunkttemperatur TPA gequencht werden;
- mindestens einen zweiten Kondensationsraum (K2) zur Kondensation der auf die Taupunkttemperatur $TP_A$ abgekühlten Abgase A; und
- mindestens eine zweite Wärmetauschanlage (W2), durch welche das im zweiten Kondensationsraum (K2) gebildete Abgaskondensat AK geführt wird.

10. Anlage nach Anspruch 9, **dadurch gekennzeichnet, dass** der mindestens eine erste Kondensationsraum (K1) und/oder der mindestens eine zweite Kondensationsraum (K2) einen horizontal und/oder vertikal angeordneten Behälter mit mindestens einem Eingang für den Eintritt der Wasserdampf enthaltenen Schwaden S oder des Abgases A und mindestens einem Ausgang für den Austritt des Schwadenkondensats SK oder des Abgaskondensats AK sowie mit mindestens einem Eingang für mindestens ein Kühlmedium und mindestens einem Ausgang für das mindestens eine Kühlmedium umfasst, wobei die jeweiligen Eingänge und Ausgänge derart zueinander angeordnet sind, dass Schwaden oder Abgas und Kühlmedium im Gegenstrom den Kondensationsraum (K1, K2) durchströmen.

11. Anlage nach einem der Ansprüche 9 bis 10, **dadurch gekennzeichnet, dass** die mindestens eine zweite Wärmetauschanlage (W2) mit einer Vorrichtung

- zur Wärmegewinnung, insbesondere zur Versorgung von Warmwasserheizungen;
- zur Stromerzeugung, insbesondere ORC (Organic Rankine Cycle) Anlagen; und/oder
- zur Kälteerzeugung, insbesondere Absorptionskälteanlagen oder Kompressionskältemaschinen,
gekoppelt ist.

**Claims**

1.  Multistage process for recovering energy from water vapour-containing vapours, in particular baking vapours, from vapour-liberating installations, in particular baking installations, and exhaust gases of at least one burner of such installations,
comprising the steps

- introduction of the vapours S into at least one condensation space (K1) to form a vapour condensate SK having the temperature $T_{SK1}$;
- introduction of the vapour condensate SK leaving the first condensation space (K1) into at least one first heat exchange installation (W1) with cooling of the vapour condensate SK to a temperature $T_{SK2}$;
- spraying of at least part of the cooled vapour condensate SK having the temperature $T_{SK2}$ into at least one quench cooler (Q) and quenching of exhaust gases A having a temperature $T_A$ introduced into the at least one quench cooler (Q) to the dew point temperature $TP_A$; wherein the vapour condensate mixed with the exhaust gas is vaporized and the exhaust gas is cooled at the same time;
- introduction of the exhaust gases A which have been cooled in the at least one quench cooler (Q) to the dew point temperature $TP_A$ and have been mixed with the vaporized vapor condensate into a second condensation space (K2) to form an exhaust gas condensate AK having the temperature $T_{AK1}$, and
- introduction of the exhaust gas condensate having the temperature $T_{AK1}$ leaving the second condensation space (K2) into at least one second heat exchange installation (W2) with cooling of the exhaust gas condensate AK to a temperature $T_{AK2}$.

2. Process according to Claim 1, **characterized in that** the vapours introduced into the first condensation space (K1) and/or the exhaust gases A introduced into the second condensation space (K2) are condensed in countercurrent by direct or indirect contact with at least one coolant.

3. Process according to either of the preceding claims, **characterized in that** the vapour condensate SK leaving the first condensation space (K1) has a temperature $T_{SK1}$ of from 60 to 70°C, preferably 65°C.

4. Process according to any of the preceding claims, **characterized in that** the vapour condensate SK is cooled to a temperature $T_{SK2}$ in the range from 20 to 50°C, preferably from 30 to 40°C, in the first heat exchange installation (W1).

5. Process according to any of the preceding claims, **characterized in that** the exhaust gases A introduced into the at least one quench cooler (Q) have an entry temperature $T_A$ in the range from 200°C to 400°C, preferably from 250°C to 350°C.

6. Process according to any of the preceding claims, **characterized in that** the exhaust gases A introduced into the at least one quench cooler (Q) are cooled to a dew point temperature $TP_A$ in the range from 90°C to 100°C, preferably 99°C.

7. Process according to any of the preceding claims, **characterized in that** the exhaust gas condensate AK leaving the second condensation space (K2) has a temperature $T_{AK1}$ in the range from 80°C to 100°C, preferably from 90°C to 99°C, in particular from 95°C to 99°C.

8. Process according to any of the preceding claims, **characterized in that** the exhaust gas condensate AK or the heated vapour condensate SK is used

   - for heat recovery, in particular for supplying hot water heaters;
   - for electric power generation, in particular in an ORC (Organic Rankine Cycle) installation; and/or
   - for cold generation, in particular in absorption refrigeration installations or compression refrigeration machines.

9. Installation used for carrying out a process according to any of the preceding claims, comprising

   - at least one first condensation space (K1) for condensing water vapour-containing vapours S, in particular baking vapours,
   - at least one first heat exchange installation (W1) through which the vapour condensate SK formed in the first condensation space (K1) is conveyed and is cooled,
   - at least one quench cooler (Q) into which exhaust gases A from the at least one burner are introduced and in which the exhaust gases A are quenched to the dew point temperature $TP_A$ with addition of the cooled vapour condensate SK introduced from the first heat exchange installation (W1);
   - at least one second condensation space (K2) for condensing the exhaust gases A which have been cooled to the dew point temperature $TP_A$; and
   - at least one second heat exchange installation (W2) through which the exhaust gas condensate AK formed in the second condensation space (K2) is conveyed.

10. Installation according to Claim 9, **characterized in that** the at least one first condensation space (K1) and/or the at least one second condensation space (K2) comprises a horizontally and/or vertically oriented vessel having at least one inlet for the entry of the water vapour-containing vapours S or of the exhaust gas A and at least one outlet for exit of the vapour condensate SK or the exhaust gas condensate AK and also having at least one inlet for at least one cooling medium and at least one outlet for the at least one cooling medium, with the respective inlet and outlets being arranged relative to one another in such a way that vapours or exhaust gas and cooling medium flow in countercurrent through the condensation space (K1, K2).

11. Installation according to either Claim 9 or 10, **characterized in that** the at least one second heat exchange installation (W2) is coupled to an apparatus

- for heat recovery, in particular for supplying hot water heaters;
- for electric power generation, in particular ORC (Organic Rankine Cycle) installations; and/or
- for cold generation, in particular absorption refrigeration installations or compression refrigeration machines.

**Revendications**

1. Procédé en plusieurs étapes destiné à la production d'énergie à partir de vapeurs contenant de la vapeur d'eau, en particulier de vapeurs de cuisson, provenant d'installations dégageant de la vapeur d'eau, en particulier d'installations de cuisson, et de gaz résiduaires provenant d'au moins un brûleur de telles installations comprenant les étapes suivantes

   - introduire les vapeurs S dans au moins une première chambre de condensation (K1), en formant un condensat de vapeurs SK à la température $T_{SK1}$ ;
   - introduire le condensat de vapeurs SK sortant de la première chambre de condensation (K1) dans au moins une première installation échangeuse de chaleur (W1) en refroidissant le condensat de vapeurs SK à une température $T_{SK2}$ ;
   - vaporiser au moins une partie du condensat de vapeurs SK refroidi à la température $T_{SK2}$ dans au moins un refroidisseur de trempe (Q) et soumettre à une trempe les gaz résiduaires A ayant une température $T_A$ introduits dans ledit au moins un refroidisseur de trempe (Q) jusqu'à la température de point de rosée $TP_A$ ; dans lequel le condensat de vapeurs mélangé aux gaz résiduaires est évaporé et les gaz résiduaires sont refroidis simultanément ;
   - introduire les gaz résiduaires A, qui sont refroidis dans ledit au moins un refroidisseur de trempe (Q) à la température de point de rosée $TP_A$, et qui sont mélangés avec le condensat de vapeurs vaporisé, dans une deuxième chambre de condensation (K2) pour former un condensat de gaz résiduaires AK ayant la température $T_{AK1}$, et
   - introduire le condensat de gaz résiduaires sortant de la deuxième chambre de condensation (K2) et ayant la température $T_{AK1}$ dans au moins une deuxième installation échangeuse de chaleur (W2), pour refroidir le condensat de gaz résiduaires AK à une température $T_{AK2}$.

2. Procédé selon la revendication 1, **caractérisé en ce que** les vapeurs introduites dans la première chambre de condensation (K1) et/ou les gaz résiduaires A introduits dans la deuxième chambre de condensation (K2) sont condensés à contre-courant en contact direct ou indirect avec au moins un fluide de refroidissement.

3. Procédé selon l'une des revendications précédentes, **caractérisé en ce que** le condensat de vapeurs SK sortant de la première chambre de condensation (K1) présente une température $T_{SK1}$ de 60 à 70°C, de préférence de 65°C.

4. Procédé selon l'une des revendications précédentes, **caractérisé en ce que** le condensat de vapeurs SK est refroidi dans la première installation échangeuse de chaleur (W1) à une température $T_{SK2}$ comprise entre 20 et 50°C, de préférence de 30 à 40°C.

5. Procédé selon l'une des revendications précédentes, **caractérisé en ce que** les gaz résiduaires A introduits dans ledit au moins un refroidisseur de trempe (Q) présentent une température d'entrée $T_A$ comprise entre 200°C et 400°C, de préférence entre 250°C et 350°C.

6. Procédé selon l'une des revendications précédentes, **caractérisé en ce que** les gaz résiduaires A introduits dans ledit au moins un refroidisseur de trempe (Q) sont refroidis à une température de point de rosée $TP_A$ comprise entre 90°C et 100°C, de préférence de 99°C.

7. Procédé selon l'une des revendications précédentes, **caractérisé en ce que** le condensat de gaz résiduaires AK sortant de la deuxième chambre de condensation (K2) présente une température $T_{AK1}$ comprise entre 80°C et 100°C, de préférence entre 90°C et 99°C, en particulier entre 95°C et 99°C.

8. Procédé selon l'une des revendications précédentes, **caractérisé en ce que** le condensat de gaz résiduaires AK ou le condensat de vapeurs chauffé SK est utilisé

   - pour la production de chaleur, en particulier pour l'alimentation d'installations de chauffage à eau chaude ;

- pour la production d'électricité, en particulier dans une centrale ORC (Organic Rankine Cycle) ; et/ou
- pour la réfrigération, en particulier dans des installations de réfrigération à absorption ou des machines de réfrigération à compression.

9. Installation utilisée pour exécuter un procédé selon l'une des revendications précédentes, comprenant

- au moins une première chambre de condensation (K1) destinée à la condensation de vapeurs S contenant de la vapeur d'eau, en particulier de vapeurs de cuisson,
- au moins une première installation échangeuse de chaleur (W1), à travers laquelle est acheminé et refroidi le condensat de vapeurs SK formé dans la première chambre de condensation (K1),
- au moins un refroidisseur de trempe (Q), dans lequel sont introduits les gaz résiduaires A provenant dudit au moins un brûleur et les gaz résiduaires A sont soumis à une trempe à la température du point de rosée $TP_A$ en ajoutant le condensat de vapeurs SK refroidi introduit en provenance de la première installation échangeuse de chaleur (W1) ;
- au moins une deuxième chambre de condensation (K2) destinée à la condensation des gaz résiduaires A refroidis à la température du point de rosée $TP_A$ ; et
- au moins une deuxième installation échangeuse de chaleur (W2), à travers laquelle est acheminé le condensat de gaz résiduaires AK formé dans la deuxième chambre de condensation (K2).

10. Installation selon la revendication 9, **caractérisée en ce que** ladite au moins une première chambre de condensation (K1) et/ou ladite au moins une deuxième chambre de condensation (K2) comprend un récipient disposé horizontalement et/ou verticalement et pourvu d'au moins une entrée pour l'entrée des vapeurs contenant de la vapeur d'eau ou des gaz résiduaires A et d'au moins une sortie pour la sortie du condensat de vapeurs SK ou du condensat de gaz résiduaires AK et pourvu d'au moins une entrée pour au moins un fluide de refroidissement et d'au moins une sortie pour ledit au moins un fluide de refroidissement, dans lequel les entrées et les sorties respectives sont agencées les unes par rapport aux autres de telle sorte que les vapeurs ou les gaz résiduaires et le fluide de refroidissement traversent la chambre de condensation (K1, K2) à contre-courant.

11. Installation selon l'une des revendications 9 à 10, **caractérisée en ce que** ladite au moins une deuxième installation échangeuse de chaleur (W2) est couplée à un dispositif utilisé

- pour la production de chaleur, en particulier pour l'alimentation d'installations de chauffage à eau chaude ;
- pour la production d'électricité, en particulier des installations ORC (Organic Rankine Cycle) ; et/ou
- pour la réfrigération, en particulier des installations frigorifiques à absorption ou des machines frigorifiques à compression.

Backschwaden S

Wärmetauscher W1

Kaltwasser

Heißwasser
65°

Kondensator K1

Kondensat SK 30°

Abgas A
400°

Kondensator K2

Quenchkühler Q

Feuchtes Abgas
TP 100°C

Kondensat A4 100°

Medium, kühl

Wärmetauscher
W2

Medium, heiß

Energiegewinnung (ORC,
Absorptionskälteanlage)

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012113800 A1
- DE 2803091 A1
- DE 29602748 U1
- DE 19825313 A1
- US 2012216762 A1
- DE 102009014805 A1
- DE 102011004460 A1
- DE 19624520 A1
- DE 2450249 B1